# EUROPÄISCHE PATENTSCHRIFT

(11) **EP 1 578 697 B1**
(45) Veröffentlichungstag und Bekanntmachung des Hinweises auf die Patenterteilung: **14.03.2007**
(21) Anmeldenummer: 04802888.0
(22) Anmeldetag: 07.12.2004
(51) Int. Cl.: C02F 3/34

(54) **VERFAHREN ZUR ENTFERNUNG VON SCHWERMETALLIONEN AUS HOCHKONZENTRIERTEN SCHWERMETALLHALTIGEN L SUNGEN**
METHOD FOR THE REMOVAL OF HEAVY METAL IONS FROM HIGHLY-CONCENTRATED SOLUTIONS CONTAINING HEAVY METAL IONS
PROCEDE POUR ELIMINER DES IONS DE METAUX LOURDS CONTENUS DANS DES SOLUTIONS A BASE DE METAUX LOURDS, TRES CONCENTREES

(30) Priorität: 29.12.2003 DE 10361733
(43) Veröffentlichungstag der Anmeldung: 28.09.2005
(73) Patentinhaber: Universität Kassel, 34125 Kassel (DE)
(72) Erfinder: DINKEL, Waldemar, 34125 Kassel (DE); FRECHEN, Franz-Bernd, 34128 Kassel (DE); KLJAVLIN, Mars, Ufa, 450062 (RU); SMIRNOV, Juri, Ufa, 450112 (RU); DINKEL, Andreas, 34125 Kassel (DE)
(74) Vertreter: Walther, Robert
(86) Internationale Anmeldenummer: PCT/DE2004/002680
(87) Internationale Veröffentlichungsnummer: WO 2005/063632

(56) Entgegenhaltungen:
- WO-A-01/36333
- WO-A-97/29055
- AT-B- 382 140
- JONG T ET AL: "Removal of sulfate and heavy metals by sulfate reducing bacteria in short-term bench scale upflow anaerobic packed bed reactor runs" WATER RESEARCH, ELSEVIER SCIENCE PUBLISHERS, AMSTERDAM, NL, Bd. 37, Nr. 14, August 2003 (2003-08), Seiten 3379-3389, XP004433929 ISSN: 0043-1354
- JALALI K ET AL: "The role of sulphate reducing bacteria in copper removal from aqueous sulphate solutions" WATER RESEARCH, ELSEVIER SCIENCE PUBLISHERS, AMSTERDAM, NL, Bd. 34, Nr. 3, 15. Februar 2000 (2000-02-15), Seiten 797-806, XP004362389 ISSN: 0043-1354
- GLOMBITZA F: "Treatment of acid lignite mine flooding water by means of microbial sulfate reduction" WASTE MANAGEMENT, ELSEVIER, NEW YORK, NY, US, Bd. 21, Nr. 2, April 2001 (2001-04), Seiten 197-203, XP004226326 ISSN: 0956-053X

## Beschreibung

Die vorliegende Erfindung betrifft ein Verfahren zur Entfernung von Schwermetallionen aus hochkonzentrierten schwermetallhaltigen Lösungen mit einem Anteil an Sulfat von Abwassern der Galvanik, umfassend einen Bioreaktor mit sulfatreduzierenden Bakterien, wobei die im Bioreaktor aus der sulfathaltigen Lösung erzeugten Sulfide einem Mischbehälter zugeführt werden.

Es sind unterschiedliche Verfahren zur Entfernung von Schwermetallionen aus schwermetallhaltigen Lösungen bekannt. So ist z. B. ein Verfahren zur Ausfällung von Schwermetallionen aus Abwässern aus der WO 80/02281 bekannt. Nach diesem Verfahren wird ein Teil des zu reinigenden Abwassers mit zudosierter Nährlösung in einen Bioreaktor gefördert. Der Ablauf aus dem Bioreaktor enthält Sulfid, das durch die Tätigkeit von sulfatreduzierenden Bakterien (SRB) erzeugt worden ist. Es wird kontinuierlich in einem Ausfällungsbehälter zusammen mit dem verbleibenden Teil des Abwassers vermischt. Anschließend werden die Schwermetallionen als Metallsulfide aus dem System entfernt.

Nachteilig ist jedoch, dass Abwässer nur bis zu einer bestimmten, der verwendeten Biomasse nicht schädlichen Schwermetallionenkonzentration behandelt werden können. Üblicherweise wird eine feste Aufteilung der Abwasserteilströme eingestellt. Da ein Überschuss an Sulfiden vorhanden sein soll, um die Restkonzentration an Schwermetallionen unterhalb der Einleitungsgrenze zu halten, kann eine Überschreitung des Einleitungsgrenzwertes für Sulfid auftreten. Um den Überschuss von Sulfiden zu eliminieren, ist es erforderlich, weitere Behandlungsschritte vorzusehen.

Aus der JP-A-60034706 ist bekannt, dass schwermetallhaltige Abwasser mit einem Teil eines H₂S-haltigen Abflusses des Bioreaktors zu vermischen, wobei unlösliche Metallsulfide gebildet werden. Nach dem Bioreaktor werden Metallsulfide und Bakterienschlamm abgetrennt. Der Bakterienschlamm wird bei der Behandlung wieder verwendet.

Nachteilig an diesem Verfahren ist die Hemmung des Bakterienwachstums, wenn der Zulauf lösliche Salze in hohen Konzentrationen enthält und die Sulfide nicht alle toxischen Substanzen eliminieren. Weiterhin ist es mit diesem Verfahren nicht möglicht, die Schwermetalle selektiv auszufällen, so dass sie wieder verwendet werden könnten.

Ein verbessertes Verfahren, das dem nächstliegenden Stand der Technik zu dem erfindungsgemäßen Verfahren darstellt, ist aus der WO 97/29055 bekannt. Nach diesem Verfahren wird mikrobiologisch hergestelltes Sulfid der metallhaltigen Lösung zugeführt, wobei die Metallsulfide vor der biologischen Sulfatreduktionsstufe aus der zu behandelnden Lösung abgetrennt werden.

Dieses bekannte Verfahren hat allerdings den Nachteil, dass die gesamte zu behandelnde Lösung den Bioreaktor passieren muss. Dies führt dann zu einer Schädigung der Bakterien, wenn die zu behandelnde Lösung toxische Substanzen und/oder hochkonzentrierte lösliche Salze enthält, was in Galvanikbetrieben allerdings oft der Fall ist. Weiterhin muss der pH-Wert der Lösung nach dem selektiven Ausfällen von Metallen wieder auf das optimale Niveau für die Biomasse gebracht werden, was mit zusätzlichen Kosten verbunden ist. Der Überschuss an Sulfiden im Ablauf des Bioreaktors verlangt darüber hinaus zusätzliche Behandlungsschritte, um ihn zu eliminieren. Zudem wird die Sulfidproduktion der Biomasse von der erhöhten Sulfidkonzentration im Zulauf negativ beeinträchtigt.

Mit Hilfe von anaeroben sulfatreduzierenden Bakterien der Gattung Desulfovibrio baarsii, Desulfovibrio sp, Desulfomicrobium sp und Desulfotomaculum sp werden aus schwermetallhaltigen sulfathaltigen Lösungen Metallsulfide gebildet. Metallsulfide haben einen sehr geringe Löslichkeit und damit wird eine niedrige Restkonzentration von Schwermetallen in der zu behandelnden Lösung erreicht. Die Erzeugung solcher Sulfide erfolgt allgemein in Bioreaktoren unter Zuhilfenahme von entsprechenden Bakterien, und insbesondere von Bakterienstämmen der zuvor genannten Art.

Bekannt ist aus dem Stand der Technik, dass diese Bakterien sehr empfindlich reagieren, wenn die zu behandelnde Lösung toxische Substanzen oder hochkonzentrierte lösliche Salze enthält. Das bedeutet, dass dann die im Bioreaktor vorhandenen Bakterienstämme gegebenenfalls vernichtet werden bzw. zumindest ihrer Sulfidproduktion gehemmt sind. Der Erfindung liegt daher die Aufgabe zu Grunde, unter Beibehaltung eines einfachen biochemischen Behandlungsverfahrens eine kontinuierlich hohe Sulfidproduktion der Biomasse sicherzustellen, um toxische Schwermetallionen eliminieren zu können, bei gleichzeitiger Reduzierung von Schwefelverbindungen aus wässrigen hochkonzentrierten schwefel- und/oder komplexbildnerhaltigen Lösungen, wie dies Abwasser der Galvanikbetriebe darstellen.

Die Aufgabe wird durch ein Verfahren gemäß Anspruch 1 gelöst.

Ein solches Verfahren zeichnet sich dadurch aus, dass die Lösung an Schwermetallionen, die dem Mischbehälter zugeführt wird, hochkonzentriert ist, wobei nachfolgend aus dem Gemisch die Metallsulfide ausgefällt werden, wobei dem Bioreaktor eine schwermetall- und sulfathaltige Lösung mit geringerer Konzentration zugeführt wird, als dem Mischbehälter. Hieraus wird deutlich, dass auf Grund der geringen Konzentration von Schwermetallen in der sulfathaltigen Lösung, die dem Bioreaktor zugeführt wird, die Funktionstüchtigkeit des Bioreaktors in jedem Fall gewährleistet ist, da die Konzentration sowohl an Schwermetallionen, als auch an Salzen in jedem Fall so gewählt ist, dass die sulfatreduzierenden Bakterien im Bioreaktor keinen Schaden nehmen und eine hohe Sulfidproduktivität besitzen.

Vorteilhafte Merkmale und Weiterbildungen der Erfindung ergeben sich aus den Unteransprüchen.

Vorteilhaft ist darüber hinaus, dass die Bildung der Sulfide aus der Lösung selbst heraus erfolgt. Eine Fremdzugabe von Sulfiden, wie dies beispielsweise aus dem Stand der Technik bekannt ist, ist somit nicht vorgesehen, was insofern von Vorteil ist, da nicht die Gefahr der Aufsalzung der Lösung besteht. Vielmehr findet eine Sulfatreduzierung statt, da die SRB das Sulfat aus der Lösung entnehmen und lediglich bei Bedarf Sulfat hinzugeführt wird.

Die Grenze zwischen verdünnter und konzentrierter Lösung liegt bei 2 mmol/l der Gesamtschwermetallionenkonzentration liegt.

Die Gesamtschwermetallionenkonzentration der dem Mischbehälter zugeführten zu behandelnden Lösung kann demzufolge bei ungefähr 2 mmol/l liegen. Damit die Bakterien im Bioreaktor die Sulfatreduktion vornehmen können, ist die Zugabe von Nährstoffen erforderlich. Als Nährstoff kann hierbei insbesondere Glycerin Verwendung finden. Die Verwendung von Glycerin als Elektonen-Donor hat zum einen den Vorteil, dass methanbildende Bakterien geringe Überlebenschancen-haben, und zum anderen, dass Glycerin preiswert ist.

Nach einem weiteren besonderen Merkmal der Erfindung ist der pH-Wert der Lösung mit geringer Konzentration an Schwermetallionen auf einen für die sulfatreduzierenden Bakterien verträglichen Wert eingestellt, wobei der pH-Wert der Lösung mit höherer Schwermetallkonzentration auf einen für die Fällung der Schwermetallionen optimalen Wert eingestellt wird.

Dem Bioreaktor ist ein Pufferbehälter vorgeschaltet, der die Lösung geringer Schwermetallkonzentration aufnimmt, bevor die mit den Nährstoffen angereicherte Lösung dem Bioreaktor zugeführt wird. Dieser Pufferbehälter weist insbesondere ein Rührwerk auf, um die in den Pufferbehälter zugegebenen Nährstoffe, z. B. Glycerin in der Lösung gleichmäßig zu verteilen.

Dem Mischbehälter wird nun zum Einen das im Bioreaktor durch die SRB erzeugte Sulfid zugeführt, und zum Anderen die schwermetallhaltige hochkonzentrierte Lösung aus dem Pufferbehälter. In einem dem Mischbehälter nachgeschalteten Becken erfolgt dann die Ausfällung der Metallsulfide, wobei die überschüssige Sulfatlösung aus dem Absetzbehälter der Filtereinrichtung wiederum dem Pufferbehälter vor dem Bioreaktor zugeführt wird, wenn die Sulfatkonzentration im Ablauf zu hoch ist.

Vorteilhaft ist ferner, dass das stöchiometrische Verhältnis von Schwermetallionen und Sulfiden im Mischbehälter anhand der unstetigen Zugabe der konzentrierten Lösung gesteuert wird. Dies kann z. B. im Wege des gemessenen Redoxpotentials erfolgen. Das heißt, ist der Anteil an Sulfiden zu niedrig, wird die Pumpe im Zufluss vom Pufferbehälter zum Mischbehälter abgeschaltet. Die Steuerung der Metallsulfidbildung erfolgt somit diskontinuierlich.

Anhand des Prozessschemas wird das erfindungsgemäße Verfahren näher erläutert.

Das Prozessschema umfasst zwei Pufferbehälter PB1 und PB2. Der Pufferbehälter PB1 mit einem Rührwerk nimmt die verdünnte Lösung, also Lösung mit einer Schwermetallionenkonzentrion von .≤ 2 mmol/l auf. Dem Pufferbehälter PB1 werden bei Bedarf ebenfalls Nährstoffe, und hier insbesondere Glycerin oder Sulfat oder beide zusammen zugeführt. Dieses Gemisch aus verdünntem Abwasser und Glycerin wird dann aus dem Pufferbehälter PB1 dem Bioreaktor mit den sulfatreduzierenden Bakterien kontinuierlich zugeführt. Im Bioreaktor wird durch diese sulfatreduzierenden Bakterien Sulfid produziert. Dieses Sulfid wird dem Mischbehälter zugeführt, wobei dem Mischbehälter aus dem Pufferbehälter PB2 die konzentrierte Lösung mit einer Konzentration an Schwermetallionen von ≥ 2 mmol/l mit Hilfe einer Pumpe (P) zugeführt wird. Dem Mischbehälter nachgeschaltet ist ein Absetzbehälter oder Filter, aus dem die Metallsulfide abgezogen werden. Ein Teil der abgeführten Lösung wird, wenn Sulfate vorhanden sind, wiederum in hoher Konzentration dem Pufferbehälter PB1 zugeführt. Denkbar ist, dass dem Absetzbehälter FeCl₃ zugeführt wird, um die Fällung zu beschleunigen. Die Pumpe wird dann abgestellt, wenn die Sulfidkonzentration so niedrig ist, dass die im Bioreaktor erzeugte Sulfidmenge nicht mit der Menge an Schwermetallionen im Mischbehälter korreliert.

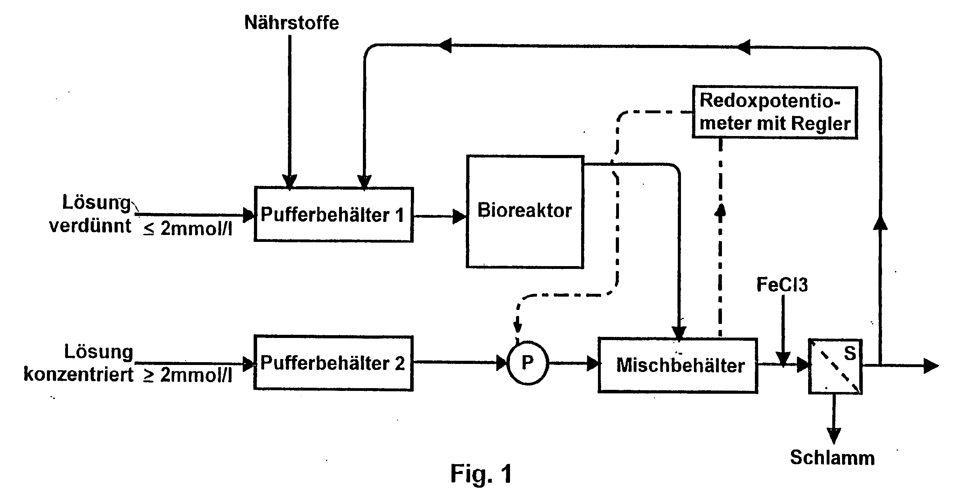

## Patentansprüche

1. Verfahren zur Entfernung von Schwermetallionen aus hochkonzentrierten schwermetallhaltigen Lösungen mit einem Anteil an Sulfat, von Abwassern der Galvanik, umfassend einen Bioreaktor mit sulfatreduzierenden Bakterien, wobei die im Bioreaktor aus der sulfathaltigen Lösung erzeugten Sulfide einem Mischbehälter zugeführt werden
**dadurch gekennzeichnet,**
**dass** dem Bioreaktor ein Pufferbehälter vorgeschaltet ist, der die schwermetallhaltige Lösung geringerer Konzentration von ≤ 2 mmol/l bezogen auf die Gesamtschwermetallionenkonzentration aufnimmt und dass dem Mischbehälter ein Pufferbehälter vorgeschaltet ist, der die schwermetallhaltige Lösung höherer Konzentration von ≥ 2 mmol/l bezogen auf die Gesamtschwermetallionenkonzentration aufnimmt, wobei die Lösung mit einer Konzentration von ≤ 2 mmol/l dem Bioreaktor und
die Lösung mit einer Konzentration von ≥ 2 mmol/l dem Mischbehälter zugeführt wird.

2. Verfahren nach Anspruch 1,
**dadurch gekennzeichnet,**
**dass** den sulfatreduzierenden Bakterien Nährstoffe zugeführt werden.

3. Verfahren nach Anspruch 2,
**dadurch gekennzeichnet,**
**dass** als Nährstoff Glycerin verwendet wird.

4. Verfahren nach einem oder mehrerer der voranstehenden Ansprüche,
**dadurch gekennzeichnet,**
**dass** der pH-Wert der Lösung mit geringer Konzentration an Schwermetallionen auf einen für die sulfatreduzierenden Bakterien verträglichen Wert eingestellt wird.

5. Verfahren nach einem oder mehrerer der voranstehenden Ansprüche,
**dadurch gekennzeichnet,**
**dass** der pH-Wert der Lösung mit höherer Schwermetallionenkonzentration auf einen für die Fällung der Schwermetallionen optimalen Wert eingestellt wird.

6. Verfahren nach einem oder mehrerer der voranstehenden Ansprüche,
**dadurch gekennzeichnet,**
**dass** überschüssige sulfathaltige Lösung nach der Fällung dem Pufferbehälter mit der schwermetall- und sulfathaltigen Lösung geringer Konzentration zugeführt wird.

7. Verfahren nach einem oder mehrerer der voranstehenden Ansprüche,
**dadurch gekennzeichnet,**
**dass** der Lösung geringer Konzentration Sulfat zugegeben wird.

8. Verfahren nach einem oder mehrerer der voranstehenden Ansprüche,
**dadurch gekennzeichnet,**
**dass** das stöchiometrische Verhältnis von Schwermetallionen und Sulfiden im Mischbehälter anhand der diskontinuierlichen Zugabe der konzentrierten Lösung gesteuert wird.

## Claims

1. A method of removing heavy metal ions from highly-concentrated solutions containing heavy metal and a proportion of sulfate from electroplating wastewaters, comprising a bioreactor with sulfate-reducing bacteria, the sulfides generated from the sulfate-containing solution in the bioreactor being supplied to a mixing vessel,
**characterized in**
**that** a buffer vessel is mounted upstream of said bioreactor for receiving the heavy metal containing solution having a lower concentration of ≤2 mmol/l, based on the overall concentration of heavy metal ions, and that a buffer vessel is mounted upstream of said mixing vessel for receiving the heavy metal containing solution having a higher concentration of ≥2 mmol/l, based on the overall concentration of heavy metal ions, the solution with a concentration of ≤2 mmol/l being supplied to said bioreactor and the solution with a concentration of ≥2 mmol/I being supplied to said mixing vessel.

2. The method as set forth in claim 1,
**characterized in**
**that** nutrients are supplied to the sulfate-reducing bacteria.

3. The method as set forth in claim 2,
**characterized in**
**that** glycerol is used as the nutrient.

4. The method as set forth in one or a plurality of the afore mentioned claims,
**characterized in**
**that** the pH of the solution with the low concentration of heavy metal ions is adjusted to a value tolerable for the sulfate-reducing bacteria.

5. The method as set forth in one or a plurality of the afore mentioned claims,
**characterized in**
**that** the pH of the solution with the higher concentration of heavy metal ions is adjusted to a value optimal for the precipitation of the heavy metal ions.

6. The method as set forth in one or a plurality of the afore mentioned claims,
**characterized in**
**that**, after precipitation, excess sulfate-containing solution is supplied to the buffer vessel holding the low-concentration, heavy metal and sulfate containing solution.

7. The method as set forth in one or a plurality of the afore mentioned claims,
**characterized in**
**that** sulfate is added to the low concentration solution.

8. The method as set forth in one or a plurality of the afore mentioned claims,
**characterized in**
**that** the stoichiometry ratio heavy metal ions to sulfides in the mixing vessel is controlled by discontinuously adding the concentrated solution.

## Revendications

1. Procédé d'extraction d'ions de métaux lourds de solutions fortement concentrées de métaux lourds et contenant un taux de sulfate d'effluents galvaniques, du type comportant un bioréacteur avec des bactéries sulfato-réductrices, les sulfures générés dans le bioréacteur à partir de la solution contenant le sulfate étant acheminés vers un récipient de mélange,
**caractérisé en ce**
**qu'**un récipient tampon recevant la solution de métaux lourds moins concentrée de ≤2 mmol/l, rapporté à la concentration totale d'ions de métaux lourds, est monté en amont du bioréacteur, et qu'un récipient tampon recevant la solution de métaux lourds plus fortement concentrée de ≥2 mmol/1, rapporté à la concentration totale d'ions de métaux lourds, est monté en amont du récipient de mélange, la solution concentrée à ≤2 mmol/l étant acheminée vers le bioréacteur et la solution concentrée à ≥2 mmol/l étant acheminée vers le récipient de mélange.

2. Procédé selon la revendication 1,
**caractérisé en ce**
**que** les bactéries sulfato-réductrices sont alimentées de nutriments.

3. Procédé selon la revendication 2,
**caractérisé en ce**
**que** le nutriment utilisé est du glycérol.

4. Procédé selon une ou plusieurs des revendications précédentes,
**caractérisé en ce**
**que** le pH de la solution d'ions de métaux lourds moins concentrée est ajusté à une valeur tolérable pour les bactéries sulfato-réductrices.

5. Procédé selon une ou plusieurs des revendications précédentes,
**caractérisé en ce**
**que** le pH de la solution d'ions de métaux lourds plus fortement concentrée est ajusté à une valeur optimale pour la précipitation des ions de métaux lourds.

6. Procédé selon une ou plusieurs des revendications précédentes,
**caractérisé en ce**
**que** l'excès de solution à teneur en sulfate est acheminé vers le récipient tampon contenant la solution de métaux lourds et de sulfate moins concentrée.

7. Procédé selon une ou plusieurs des revendications précédentes,
**caractérisé en ce**
**que** la solution moins concentrée est additionnée de sulfate.

8. Procédé selon une ou plusieurs des revendications précédentes,
**caractérisé en ce**
**que** le rapport stoechiométrique entre les ions de métaux lourds et les sulfures dans le récipient de mélange est contrôlé en additionnant de façon discontinue de la solution concentrée.
